(19) Europäisches Patentamt
European Patent Office
Office européen des brevets

(11) Publication number: 0 447 831 A2

(12) **EUROPEAN PATENT APPLICATION**

(21) Application number: 91102622.7

(22) Date of filing: 22.02.91

(51) Int. Cl.[5]: C08L 67/02, C08L 67/03, //(C08L67/02,67:03,51:00), (C08L67/03,67:02,51:00)

(30) Priority: 21.03.90 US 497000

(43) Date of publication of application: 25.09.91 Bulletin 91/39

(84) Designated Contracting States: DE FR GB IT NL

(71) Applicant: GENERAL ELECTRIC COMPANY
1 River Road
Schenectady New York 12305(US)

(72) Inventor: Nan-I, Liu
1604 Country Club Road, No. D.
Mount Vernon, Indiana 47620(US)

(74) Representative: Catherine, Alain
General Electric France Service de Propriété Industrielle 18 Rue Horace Vernet
F-92136 Issy-Les-Moulineaux Cedex(FR)

(54) **Polyester resin blends.**

(57) This invention relates to thermoplastic molding compositions, comprising:
(a) a polyester resin derived from a cyclohexanedimethanol and a hexacarbocyclic dicarboxylic acid; and
(b) a polyarylate resin; and
(c) an effective amount of an impact modifier preferably comprising a core-shell multi-stage polymer having a rubbery core and a (co-)polymer outer shell.
The compositions of the present invention have improved notched impact strength and UV resistivity.

EP 0 447 831 A2

This invention relates to modified thermoplastic molding compositions that have good impact strength and improved UV resistivity. More particularly, the invention pertains to compositions containing a a polyester resin derived from a cyclohexane dimethanol and a hexacarbocylic dicarboxylic acid, a polyarylate resin and an effective amount of an impact modifier preferably comprising of a core-shell (co-)polymer.

## BACKGROUND OF THE INVENTION

High molecular weight polyesters and particularly linear polyesters derived from 1,4-cyclohexanedimethanol have been available for a number of years. These are described inter alia in Kilber et al, U.S. Pat. No. 2,901,466, which discloses that such polyesters are particularly advantageous as film and fiber-formers.

It has been known to improve the impact strength of such polyesters by modifying them with an appropriate impact modifier. For example, it is known to modify such polyesters by blending them with an effective amount of an impact modifier comprising a core-shell (co-)polymer, such as a core-shell acrylate (co-)polymer. However, while such impact modified polyesters have improved impact strength, they have weak UV resistance, which is a substantial problem, particularly when such compositions are utilized in films. It would be advantageous, therefore, to have impact resistant blends of such polyester resins that have improved UV resistivity.

## SUMMARY OF THE INVENTION

This invention relates to thermoplastic molding compositions, comprising:

(a) a polyester resin derived from a cyclohexanedimethanol and a hexacarbocyclic dicarboxylic acid; and

(b) a polyarylate resin; and

(c) an effective amount of an impact modifier preferably comprising a core-shell multi-stage polymer having a rubbery core and a (co-)polymer outer shell.

## DETAILED DESCRIPTION OF THE INVENTION

The polyesters utilized in the process of the present invention are derived from cyclohexanedimethanol and are prepared by condensing either the cis- or trans-isomer (or a mixture thereof) of, for example, 1,4-cyclohexanedimethanol with a hexacarbocyclic dicarboxylic acid so as to produce a polyester having recurring units having the following formula I:

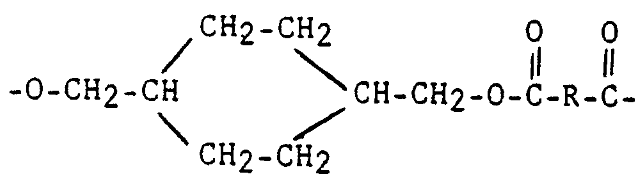

wherein the substituted cyclohexane ring is selected from the group consisting of the cis- and trans-isomers thereof and R represents an organic radical containing from 6 to 20 carbon atoms which is the dicarboxylated residue derived from a hexacarbocyclic dicarboxylic acid.

The preferred polyester resins may be derived from the reaction of a mixture of the cis-and trans-isomers of 1,4-cyclohexanedimethanol with a mixture of iso- and terephthalic acids. These polyesters have recurring units of the formula II:

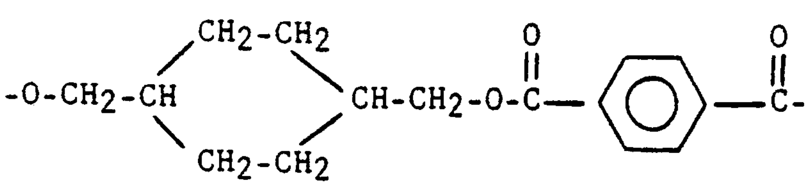

These polyesters can be produced by well known methods in the art such as those set forth in U.S. 2,901,466. The poly (1,4-cyclohexanedimethanol terephthalate) is commercially available. Of course, it is understood that the polyester resins of this invention can be prepared by condensing 1,4-cyclohexanedimethanol and minor amounts of other bifunctional glycols with the hexacarbocyclic dicarboxylic acid. These other bifunctional glycols include the polymethylene glycols containing from 2 to 10 or more carbon atoms such as ethylene glycol, butylene glycol, etc.

Examples of hexacarbocyclic dicarboxylic acids wherein the carboxy radicals are attached in para relationship to a hexacarbocyclic residue indicated by R in formula (I) include terephthalic acid, transhexahydroterephthalic acid, p,p'-sulfonyldibenzoic acid, 4,4'-diphenic acid, 4,4'-benzophenonedicarboxylic acid, 1,2-di(p-carboxyphenyl)ethane, 1,2-di(p-carboxyphenyl)ethane, 1,2-di(p-carboxyphenoxy)-ethane, 4,4'-dicarboxydiphenyl ether, etc. and mixtures of these. All of these acids contain at least one hexacarbocyclic nucleus. Fused rings can also be present such as in 1,4-, 1,5 or 2,6-napthalenedicarboxylic acid. The hexacarbocyclic dicarboxylic acids are preferably those containing a transcyclohexane nucleus or an aromatic nucleus containing from one to two benzene rings of which at least one has the usual benzenoid unsaturation. Of course, either fused or attached rings can be present. All of the compounds named in this paragraph come within the scope of this preferred group. The preferred dicarboxylic acids is terephthalic acid.

These polyesters, which are alternatively refered to herein as "PCT Resins" should have an intrinsic viscosity between 0.40 and 2.0 dl./g. measured in a 60/40 phenoltetrachloroethane solution or a similar solvent at 25°-30° C. Especially preferred polyesters will have an intrinsic viscosity in the range of 0.5 and 1.2 dl./g.

The polyarylates utilized in the present invention are polyesters derived from a dihydric phenol, particularly 2,2-bis(4-hydroxyphenyl)propane, also identified as bisphenol-A, and an aromatic dicarboxylic acid, particularly mixtures of terephthalic and isophthalic acids. Linear aromatic polyesters (polyarylate) suitable for use in compositions of the invention and methods for preparing them are well known and described in detail in U.S. Pat. No. 4,304,709 and US. Pat. No. 4,598,130 the disclosure of which is incorporated herein by reference. These polyarylates are high temperature, high performance thermoplastic polymers with a good combination of thermal and mechanical properties. They also have good processability which allows them to be molded into a variety of articles.

The polyarylates which are suitable for use in this invention are derived from a dihydric phenol and at least one aromatic dicarboxylic acid and preferably have a reduced viscosity of from about 0.4 to greater than about 1.0, most preferably from about 0.6 to about 0.8 dl/gm, as measured in chloroform (0.5 g/100 ml chloroform or other suitable solvents at 25° C.

A particularly desirable dihydric phenol is of the following formula:

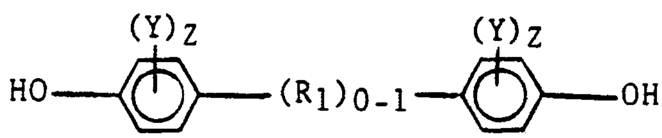

wherein Y is selected from alkyl groups of 1 to 4 carbon atoms, chlorine or bromine, and each Z, independently, has a value of from 0 to 4, inclusive, and $R_1$ is a divalent saturated or unsaturated aliphatic hydrocarbon radical, particularly an alkylene or alkylidene radical having from 1 to 6 carbon atoms, or a cycloalkylidene or cycloalkylene radical having up to and including 9 carbon atoms, O, CO, $SO_2$,S or a direct bond. The dihydric phenols may be used individually or in combination, or in combination with hydroquinone and/or resorcinol.

The aromatic dicarboxylic acids that may be used in this invention include terephthalic acid, isophthalic acid, any of the naphthalene dicarboxylic acids and mixtures thereof, as well as alkyl substituted homologs of these carboxylic acids, wherein the alkyl group contains from 1 to about 4 carbon atoms, and acids containing other inert substituents, such as halides, alkyl or aryl ethers, and the like. Hydroxybenzoic acid can also be used. Preferably, mixtures of isophthalic and terephthalic acids are used. The isophthalic acid to terephthalic acid ratio in the mixture is about 10:90 to about 100:0, while the most preferred acid ratio is about 75:25 to about 25:75. Also, from about 0.5 to about 20 percent of aliphatic diacids containing from 2 to about 10 carbon atoms, such as diacid acid, sebacic acid, and the like may be additionally used in the polymerization reaction.

The polyarylates of the present invention can be prepared by any of the well known prior art polyester forming reactions, such as the reaction of the acid chlorides of the aromatic dicarboxylic acids with the

dihydric phenols; the reaction of the diaryl esters of the aromatic dicarboxylic acids with the dihydric phenols; or the reaction of the aromatic diacids with diester derivatives of the dihydric phenol. These processes are described in for example, U.S. Pat. Nos. 3,317,464; 3,948,856, 3,780,213; and 3,133,898.

The polyarylates are preferably prepared by the process described in U.S. Pat No. 4,321,355. This patent describes an improved process for preparing a polyarylate having a reduced viscosity of from about 0.5 to greater than 1.0 dl/gm comprising the following steps:

a. reacting an acid anhydride derived from an acid containing from 2 to 8 carbon atoms with at least one dihydric phenol to form the corresponding diester; and

b. reacting said diester with at least one aromatic dicarboxylic acid at a temperature sufficient to form the polyarylate, and removing residual acid anhydride after formation of the dihydric phenol diester so that its concentration is less than about 1500 parts per million.

Polyarylates suitable for use in the present invention are commercially available from a number of sources including Hoechst-Celanese Corporation (Durel 400) and Amoco Corporation (Ardel D-100).

The third component of the present invention is an impact modifier for the PCT resin. The preferred impact modifier comprises core-shell rubber core poly(meth)acrylate outer shell polymers. These resins can be made in known ways and they are available from a number of sources, e.g., Rohm & Haas Company, Philadelphia, U.S.A., under the trade designations Acryloid, KM330 and KM653. Acryloid® KM330 is a core shell polymer comprising 40/60 methyl methacrylate shell/n-butyl acrylate polymer core. Other useful multi-stage polymers are available from the Kanagafuchi Co., Japan. In general, any of the polyalkyl (meth)-acrylates described in Brinkmann et al. , U.S. 3,591,659 can be used, especially those containing units derived from n-butyl acrylate. Preferably, the polyacrylate resin will be in the form of a rubber elastic graft copolymer having a glass transition temperature below -20°C. as described in Schlichting et al., U.S. 4,022,748. Especially preferably, the polyacrylate will comprise a multiple stage polymer having a rubbery first stage and a thermoplastic hard final stage, as described in Farnham et al., U.S. 4,096,202, and Avakian et al., U.S. 4,587,272, incorporated herein by reference.

The polyacrylate impact-modifier described above, e.g., KM®330, can be added to the other resinous components of the invention in a concentrate form, e.g., in ethylene ethyl acrylate copolymer resins.

The impact modifier utilized herein may, as mentioned, also comprise an acrylic or methacrylic monomer grafted polymer of a conjugated diene alone or copolymerized with a vinyl aromatic compound. Preferably, the core shell polymers of the type available from Rohm and Haas under the trade designation ACRYLOID KM® 653 are used, especially those containing units derived from butadiene or isoprene, alone or in combination with a vinyl aromatic compound. These are described in Fromuth et al., U.S. 4,780,494. Butadiene-type core-shell polymers suitable for use in the compositions of this invention are well known and are described for instance in U.S. Pat. No. 4,180,494, the disclosure of which is incorporated herein by reference. Especially preferably, the copolymer component will comprise a three stage polymer having a butadiene based rubbery core, a second stage polymerized from styrene and a final stage or shell polymerized from methyl methacrylate and 1,3-butylene glycol dimethacrylate or will comprise a two stage polymer having a butadiene based rubbery core and a 2nd stage or shell polymerized from methyl methacrylate and 1,3-butylene glycol dimethacrylate.

The impact modifier suitable for use in the present invention can also comprise an acrylonitrile-butadiene-styrene (ABS) graft copolymer, which are well known to those skilled in the art.

Particularly suitable ABS-type impact modifiers can be produced according to the procedures as set forth in U.S. 4,764,563, which is incorporated herein by reference.

This patent teaches that such impact modifiers are prepared by grafting particular ratios of styrene and acrylontirile on butadiene based rubber substrates.

Specifically, these impact modifiers are ABS graft copolymer resins prepared by graft polymerizing particular ratios of styrene and acrylonitrile in the presence of particular styrene-butadiene rubber substrates.

The butadiene based rubber substrates useful in preparing such impact modifiers are conventional copolymers of styrene and butadiene which optionally include up to 15 wt% of acrylonitrile and/or an alkyl acrylate in which the alkyl group contains 4 or more carbon atoms, and comprise from 50 to 95 wt% butadiene and from 5 to 50 wt% styrene. The rubber substrate may further include from 0-2 wt% of additional copolymerizable cross-linking monomers such as divinylbenzene, triallylcyanurate or the like, up to 2 wt% of chain transfer agents, such as tertiary dodecyl mercaptan, and up to 2 wt% of graft enhancers such as alkyl methacrylate, diallylmaleate and the like. Diene polymer and copolymer rubbers are well known and widely employed commercially for a number of purposes. The preparation of such rubbers may be accomplished by any of a variety of processes well known and conventionally used. Particularly used are emulsion polymerization processes which provide the rubber in latex form suitable for use in subsequent

graft polymerization processes.

These ABS-type impact modifiers suitable for use in this invention are prepared by graft polymerizing from about 40 to about 70, preferably from 47 to 61 parts by weight of a grafting monomer mixture comprising a monovinyl aromatic compound (MVA), such as styrene, a methyl styrene, p-methyl styrene or a combination thereof and an ethylenicaly unsaturated nitrile (EUN) such acrylonitrile and/or methacrylonitrile in the presence of 100 parts by weight of butadiene based rubber substrate. The impact modifier is thus a high rubber graft copolymer having a rubber content of from about 50 to about 80 wt%, preferably from 52 to 78 wt% and, correspondingly, a graft monomer component or superstrate of from about 50 to 20, preferably from 48 to 22 wt%.

The weight ratio of the MVA to the EUN in the grafting monomer mixture will be in the range of from 3/1 to 5/1. and preferably, from 3.8/1 to 4.2/1.

This graft polymerization of the MVA/EUN monomer mixture in the presence of the rubbery substrate may be carried out by any of the graft polymerization processes well known and widely used in the polymerization art for preparing ABS resins, including emulsion, suspension and bulk processes. Typical of such processes are emulsion graft polymerization processes wherein the grafting monomers are added together with surfactants and chain transfer agents as desired, to an emulsion latex of the rubbery substrate and polymerized using an initiator. The initiator may be any of the commonly used free-radical generators including peroxides such as alcumyl peroxide or azo initiators such as axobisisobutyronitrile. Alternatively, any of the variety of redox polymerization catalysts such as the combination of cumene hydroperoxide with ferrous sulfate and sodium formaldehyde sulfoxylate which are well known and widely used in such processes may be employed. The graft polymerization process used in the preparation of the impact modifiers of this invention, as well as those processes used in coagulating and isolating the impact modifier for further use, are thus well known and conventional, and the application of such processes to the preparation of the impact modifiers for further use, are thus well-known and conventional, and the apparent to those skilled in the art.

The impact polymer suitable for use in the present invention may also comprise a styrenic polymer which comprises a rigid portion and a rubber portion. The rigid portion is formed from at least two ethylenically unsaturated monomers, one of which comprises styrene and/or substituted styrene. Preferred substituted styrenes include, but are not limited to, halogen-substituted styrene, particularly wherein the halogen is substituted on the armotic ring, alpha-methyl styrene and para-methyl styrene. The other ethylenically unsaturated monomer which is used in forming the rigid portion may be selected from acrylonitrile, substituted acrylonitriles, acrylates, alkyl, substituted acrylates, methacrlyates, alkyl substituted methacrylates, and ethylenically unsaturated carboxylic acids, diacids, dianhydrides, acid esters, diacid esters, amides, imides and alkyl and aryl substituted imides. Preferably, the second monomer which is used to form the rigid portion is selected from the group consisting of acrylonitrile, methacrylonitrile, alkyl methacrylates, malaic, anhydride, maleimide, alkyl maleimides and aryl maleimides, and mixtures thereof. It is further preferred that the rigid portion is formed from about 60 to about 95 weight percent, and more preferably 60 to 80 weight percent, of the styrene and/or substituted styrene monomers, and from about 5 to about 40 weight percent, and more preferably 20 to 40 weight percent, of the second monomer.

The rubber portion may be formed from polymers or copolymers of one or more conjugated dienes, copolymers of conjugated dienes and non-diene vinyl monomers, alkyl acrylate polymers, and copolymers of ethylenically unsaturated olefins and non-conjugated diene polymers (EPDM) rubbers. A preferred rubber portion includes polybutadiene.

The styrenic polymer component may be formed such that the rigid portion is grafted to the rubber portion. Alternatively, the rigid portion may be blended with the rubber portion. When the rigid portion is blended with the rubber portion, it is preferred that the rubber portion has been previously grafted with one or more grafting monomers. Accordingly, the styrenic polymer component may be so produced by any method known in the art, for example, emulsion, bulk, mass or suspension polymerization processes. It is preferred that the styrenic polymer component contains from about 10 to 90 weight percent of the rubber portion and from about 10 to 90 weight percent of the rigid portion, based on the rubber portion and the rigid portion. More preferably, the styrenic polymer component comprises from about 40 to about 80 weight percent of the rubber portion and from about 20 to about 60 weight percent of the rigid portion, based on the rubber portion and the rigid portion.

The amount of the impact modifier can also vary widely. It has been found that even relatively minor amounts of the modifier are effective in providing significant improvements in impact strength over a range of low temperatures.

It should be understood that the composition obtained according to this invention may contain one or more conventional additives such as, for example, antioxidants, such as Olin's Wytox 312 (Tris-(nonyl

phenyl) phosphite), Dow's ECN 1299, a multifuntional epoxy antioxidant, carbon black, reinforcing agents, plasticizers, lubricity promoters, color stabilizers, ultraviolet absorbers, X-ray opacifiers, dyes, pigments, fillers, mold release agents, and the like.

Satisfactory thermal, oxidative and/or ultraviolet stabilizers comprise phenols and their derivatives, amines and their derivatives, compounds containing both hydroxyl and amine groups, hydroxyazines, oximes, polymeric phenolic esters and salts of multivalent metals in which the metal is in its lower state.

Representative phenol derivatives useful as stabilizers include 3,5-di-tert-butyl-hydroxy hydrocinnamic triester with 1,3, 5-tris-(2-hydroxyethyl-s-triazine-2,4,6-(1H, 3H, 5H) trione; 4,4'-bis-(2,6-ditertiary-butylphenol); 1,3,5-trimethyl-2,4,6-tris-(3,5-ditertiary-butyl-4-hydroxylbenzyl)benzene and 4,4'-butylidene-bis (6-tertiary-butyl-m-cresol). Various inorganic metal salts or hydroxides can be used as well as organic complexes such as nickel dibutyl dithiocarbamate, manganous salicylate and copper 3-phenylsalicylate. Typical amine stabilizers include N,N'-bis(betanaphthyl)-p-phenylenediamine; N,N'-bis-(1-methylheptyl)-p-phenylenediamine and either phenyl-beta-napththyl amine or its reaction products with aldehydes. Mixtures of hindered phenols with esters or thiodipropionic, mercaptides and phosphite esters are particularly useful. Additional stabilization to ultraviolet light can be obtained by compounding with various UV absorbers such as substituted benzophenones and/or benzotriazoles.

Particularly useful stabilizers are hindered phenols which include phenols of the formula

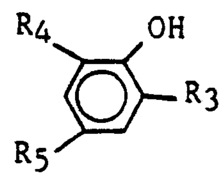

wherein $R_3$ and $R_4$ are hydrocarbon groups having from one to about 20 carbon atoms, and $R_5$ is a hydrogen atom or a hydrocarbon group having from one to about 20 carbon atoms, and bisphenol of the formula

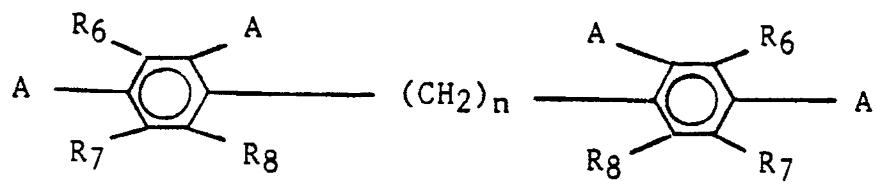

wherein $R_6$, $R_7$ and $R_8$ are each a hydrogen atom or a hydrocarbon group having from one to about 20 carbon atoms, one of the two A's on each ring is a hydroxyl group and the other A on each ring is a hydrogen atom or a hydrocarbon group having from one to about 20 carbon atoms; and n is an integer of from 0 to about 20.

Preferred hindered phenols useful in this invention include 2,6-di-tert-butyl-4-methyl-phenol, commonly known as BHT (sold under the tradename Ionol® by Shell Chemical Co.); 4,4-methylene bis(2,6-di-tert-butylphenol) and 2,6-di-tert-butyl-4-n-butylphenol (sold under the tradename Ethyl 702 and Ethyl 744, respectively, by Ethyl Corp.); and tetrakis[methylene 3-(3',5'-di-tert-butyl-4'-hydroxyphenyl) proprionate]-methane and stearyl-3-(3',5'-di-tertbutyl-4'-hydroxyphenyl) proprionate (sold under the tradenames Irganox 1010 and Irganox 1076, respectively, by Ciba-Geigy).

The compositions of the present invention will preferably contain (a) from about 10 % to about 95 % by weight, more preferably from about 15% to about 90% by weight and most preferably from about 20% to about 70 % of a resin derived from a cyclohexane-dimethanol and a hexacarboxylic dicarboxylic acid; (b) from about 3% to about 85% by weight, more preferably from about 10% to about 80% by weight and most preferably from about 20% to about 70% of a polyarylate resin and (c) from about 2% to about 30% by weight and most preferably from about 10% to about 20% of the impact modifier, said weight percentages being based on the total weight of the polyester resin, the polyarylate resin, and the impact modifier.

The components of the composition of the present invention can be intimately blended in a number of procedures. In one way, the various additives to the polyester resin are put into an extrusion compounder with the dry polyester resin and the blend is heated at an elevated temperature, e.g., 550°-650°F., and extruded to produce molding pellets. In another procedure, the additives are mixed with the polyester resin

by blending at ordinary temperatures, then the blend is fluxed on a mill, heated, e.g., at 550°-650° F., then cooled and comminuted; or the blend can be extruded at 550°-650° F., cooled and chopped. The additives are mixed with the powdered or granular polyester and the mixture can be heated and directly formed into molded items using machines which compound and mold.

## DESCRIPTION OF THE PREFERRED EMBODIMENT

The following examples are presented to more fully and clearly illustrate the present invention. They are presented as illustrative of the invention and are not to be construed as limiting the invention thereto. In the examples all parts and percentages are on a weight basis unless otherwise specified.

The following Example 1 illustrates a composition following outside the scope of the instant invention in that it does not contain any polyarylate resin. Example 3 is also outside of the scope of the present invention in that it contains, for comparison purposes, a polyalkylene terephthalate resin, rather than any of the specified polyarylate resin. These examples are presented for comparative purposes only.

The compositions contained a stabilizer package comprising standard antioxidants and transesterification inhibitors, the selection of which is well within the ability of those skilled in the art and is not crucial to the present invention. It should be noted, however, that the stabilizer package did not include any UV stabilizers.

In all the examples, the compositions were prepared by melt blending the polyester resins and the indicated additional components as set forth in the Table below using a Prodex single screw extruder at approximately 600° F. The resulting polymeric composition was formed, by injection molding, into test specimens of the size described in the corresponding ASTM methods. The notched izod and UV properties of the compositions were tested with the results of these tests set forth in the Table below. The following ASTM methods were used in determining the physical characteristics of the compositions:

| | |
|---|---|
| Izod Impact Strength | ASTM D256 |
| Dynatup | ASTM D1709 |

**TABLE**

| | EXAMPLE NUMBER | | |
|---|---|---|---|
| | 1 | 2 | 3 |
| PCT | 83.1 | 68.1 | 68.1 |
| KM330 | 15.0 | 15.0 | 15.0 |
| Ardel D-100 | -- | 15.0 | -- |
| PET | -- | -- | 15.0 |
| Stabilizer | 1.9 | 1.9 | 1.9 |
| Properties | | | |
| Notched Izod @ RT | 8.3 | 12.5 | 2.5 |
| Dynatup @ RT, Initial | 32/47D | 34/39D | 27/45D |
| Dynatup @ RT, 1Wk QUV | 6/14DB | 36/39D | 3/3B |
| Dynatup @ RT, 2Wk QUV | 6/8B | 39/42D | ---B |

PET is poly(ethylene terephthalate resin)

PCT is poly (1,4-cyclohexane dimethylene terephthalate) resin

RT is room temperature (appx. 70°F)

D= Ductile

B= Brittle

The above data indicates that the UV resistivity and impact property of impact modified PCT blends is greatly, and unexpectedly improved by the addition of a polyarylate resin, when compared to either a blend of (1) the specified polyester resin and an impact modifier only or (2) the specified polyester resin, the impact modifier and a comparative resin, which in Example 3 is poly (ethylene terephthalate) resin.

Obviously, other modifications and variations of the present invention are possible in light of the above teachings. It is therefore to be understood that changes may be made in the particular embodiments of the invention described which are within the full intended scope of the invention as defined by the appended claims.

**Claims**

**1.** A impact modified thermoplastic composition having improved UV resistance comprising:
(a) a polyester resin derived from a cyclohexanedimethanol and a hexacarboxyclic dicarboxylic acid;
(b) a polyarylate resin; and
(c) an impact modifier.

**2.** The composition of Claim 1 wherein component (a) comprises from about 10% to about 95% by weight of the total of components (a), (b), and (c).

**3.** The composition of Claim 2 wherein component (a) comprises from about 20% to about 70% by weight

of the total of components (a), (b), and (c).

4. The composition of Claim 1 wherein component (b) comprises from about 3% to about 85% by weight of the total of components (a), (b), and (c).

5. The composition of Claim 4 wherein component (b) comprises from about 20% to about 70% by weight of the total of components (a), (b), and (c).

6. The composition of Claim 1 wherein component (c) comprises from about 2% to about 30% by weight of the total of components (a), (b), and (c).

7. The composition of Claim 6 wherein component (c) comprises from about 10% to about 20% by weight of the total of components (a), (b), and (c).

8. A composition as defined in Claim 1 wherein component (a) has repeating units of the formula:

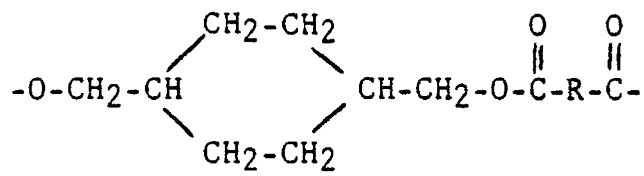

wherein the substituted cyclohexane ring is selected from the group consisting of the cis- and trans-isomers thereof and R represents an organic radical containing from 6 to 20 carbon atoms which is the decarboxylated residue derived from a hexacarboxyxlic dicarboxylic acid.

9. A composition as defined in Claim 8 wherein the polyester resin has the repeating unit:

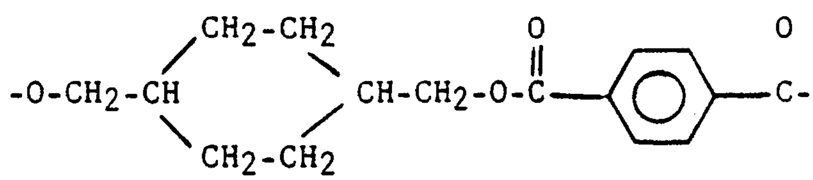

10. The composition of claim 1 wherein said impact modifier (c) is a core-shell multi-stage polymer.

11. A composition as defined in Claim 10 wherein the core in said multi-stage polymer (c) comprises units derived from n-butyl acrylate.

12. A composition as defined in Claim 10 wherein the core in said multi-stage polymer (c) comprises units derived from butadiene.

13. A composition as defined in Claim 10 wherein said multi-stage polymer (c) has a (co-)polymer outer shell.

14. A composition as defined in Claim 10 wherein the core in said multi-stage polymer (c) comprises units derived from a mixture of n-butyl acrylate and butadiene.

15. The composition as defined in Claim 1 wherein the impact modifier is an acrylonitrile-butadiene-styrene graft copolymer.

16. The composition as defined in claim 15 wherein the acrylonitrile-butadiene-styrene graft copolymer is prepared by grafting:

A. a rubbery, butadiene based substrate containing: (i) 50-95 wt% butadiene; (ii) 22-50 wt% styrene, (iii) up to 15 wt% total of at least one of (a) acrylonitrile and (b) an alkyl acrylate containing four or more carbon atoms, and (iv) 0-2 wt% of a copolymerizable crosslinking agent, with;

B. a monomer mixture containing: (i) one or more monovinyl aromatic compounds, (ii) an ethylenically unsaturated nitrile, the ratio of B(i) to B(ii) being from 3/1 to 5/1, (iii) 0-2 wt% of a copolymerizable cross-linking agent, (iv) 0-2 wt% of a chain transfer agent, and (v) 0-2 wt% of a graft enhancing agent;

said substrate being 100 parts by weight in the presence of from 40 to 70 parts by weight of said monomer mixture.

**17.** The composition of Claim 16 wherein the amount of monomer mixture is from 47 to 61 parts by weight per hundred parts by weight of said substrate.

**18.** The composition of Claim 17 wherein the weight ratio of said monovinyl aromatic compounds to said ethylenically unsaturated nitrile is about 4 to 1.

**19.** The composition of Claim 16 wherein said monovinyl aromtic compound is selected from the group consisting of (a) styrene, (b) methyl styrene and (c) p-methyl styrene and mixtures of (a), (b), or (c).

**20.** The composition of claim 16 wherein said ethylenically unsaturated nitrile is selected from the group consisting of (a) acrylonitrile (b) methylacrylonitrile and (c) mixtures of (a) and (b).

**21.** The composition of claim 20 wherein said ethylenically unsaturated nitrile is acrylonitrile.

**22.** The composition of claim 1 wherein the impact modifier is a polymer comprising a rigid portion and a rubber portion, the rigid portion being formed from at least one monomer selected from the group consisting of styrene, halogen-substituted styrene, alphamethylstyrene and para-methylstyrene, and at least one monomer selected from the group consisting of acrylonitrile, methacrylonitrile, alkyl methacrylate, maleic anhydride, maleimide, alkyl maleimide and aryl maleimide, and the rubber portion including polybutadiene.

**23.** The composition of Claim 22 wherein the styrenic polymer component comprises the rigid portion blended with the rubber portion, and wherein the rubber portion includes at least one monomer grafted thereto.

**24.** The composition of claim 23 wherein the styrenic polymer component comprises the rigid portion grafted to the rubber portion.

**25.** The composition of Claim 1 wherein the polyarylate is prepared from bisphenol-A and a resin mixture of terephthalic and isophthalic acids.

**26.** A composition as defined in Claim 1 which also includes a reinforcing amount of a reinforcing agent.

**27.** A composition as defined in Claim 1 wherein said reinforcing agent comprises glass fibers.